# EUROPEAN PATENT APPLICATION

(11) **EP 4 692 596 A1**
(43) Date of publication of application: **11.02.2026**
(21) Application number: 23932980.8
(22) Date of filing: 12.04.2023
(51) Int. Cl.: F16H 15/38, F16H 37/02

(54) **CONTINUOUSLY VARIABLE TRANSMISSION**

(71) Applicant: Univance Corporation, Kosai-city, Shizuoka 431-0494 (JP)
(72) Inventor: YAMAUCHI Yoshihiro, Kosai- City, Shizuoka 4310494 (JP)
(74) Representative: Prüfer & Partner mbB Patentanwälte · Rechtsanwälte
(86) International application number: PCT/JP2023/014835
(87) International publication number: WO 2024/214204

(57) **Abstract**

A continuously variable transmission (10) capable of preventing a roller (28) from falling off between track surfaces (22 and 26) and increasing the ratio coverage of an output in a negative direction. The continuously variable transmission includes a variator (20) including an input disk (21), having a curved track surface, that rotates integrally with an input shaft (14), an output disk (25) having a track surface facing the curved track surface, and a roller pressed against the two track surfaces, a planetary device (40) including a first element (41) to which a torque of the input shaft is input, a second element (42) to which a torque of the output disk is input, and a third element (44) that rotates as the first element and the second element rotate in which the third element is coupled to an output shaft (46), and a first one-way clutch (60), disposed between the output shaft and a fixed member (59), that prevents the output shaft from rotating in a reverse direction.

## Description

### Technical Field

The present invention relates to a continuously variable transmission including a toroidal continuously variable transmission and a planetary device.

### Background Art

There is a known continuously variable transmission including a toroidal continuously variable transmission (variator) including an input disk, having a curved track surface, that rotates integrally with an input shaft, an output disk having a curved track surface, and a roller that is pressed against a portion between the two track surfaces, and a planetary device that distributes a torque of the input shaft and transmits the torque to the output shaft. In the related art disclosed in Patent Document 1, a one-way clutch that prevents the output disk from rotating faster in the positive direction than the input shaft is disposed between the input shaft and the output disk to prevent the roller from falling off from between the track surfaces.

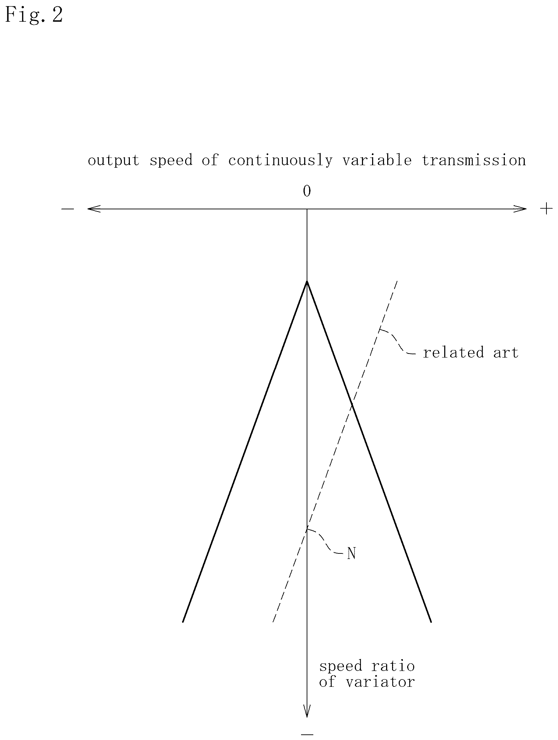

Fig. 2 is a diagram illustrating the relationship between the speed ratio (output speed/input speed) of the variator and the output speed of the continuously variable transmission. In Fig. 2, the vertical axis represents the speed ratio of the variator, and the horizontal axis represents the output speed of the continuously variable transmission. When the rotation direction of the input shaft and the input disk is assumed to be the positive direction, the rotation direction of the output disk caused by the rotation of the input disk and the roller is always the negative direction, and accordingly, the speed ratio (vertical axis) of the variator is always negative. In the related art (the dashed line in Fig. 2), when the output speed of the continuously variable transmission is switched from the positive direction to the negative direction, the output in the positive direction is gradually reduced due to gear shifting by the variator and is reversed to the output in the negative direction through the neutral (N).

### Citation List

### Patent Literature

PTL 1: Japanese Patent No. 4715795

### Summary of Invention

### Technical Problem

In the related art, since the output direction of the continuously variable transmission becomes negative after passing the neutral, the ratio coverage (the range of the speed ratio of the variator) of the output in the negative direction of the continuously variable transmission is small disadvantageously.

The present invention addresses this problem with an object of providing a continuously variable transmission capable of preventing the roller from falling off between the track surfaces and increasing the ratio coverage of the output in the negative direction.

### Solution to Problem

To achieve this object, according to a first aspect of the present invention, there is provided a continuously variable transmission including: a variator including an input disk, having a curved track surface, that rotates integrally with an input shaft, an output disk having a track surface facing the curved track surface, and a roller pressed against the two track surfaces; a planetary device including a first element to which a torque of the input shaft is input, a second element to which a torque of the output disk is input, and a third element that rotates as the first element and the second element rotate, the third element being coupled to an output shaft; and a first one-way clutch, disposed between the output shaft and a fixed member, that prevents the output shaft from rotating in a reverse direction.

According to a second aspect, there is provided the continuously variable transmission according to the first aspect, further including: a reversal mechanism that transmits power while reversing a rotation direction of the output shaft; and a clutch disposed between the output shaft and the reversal mechanism, in which the first one-way clutch is disposed between the clutch and the planetary device.

According to a third aspect, there is provided the continuously variable transmission according to the first or second aspect, further including: a second one-way clutch, disposed between the fixed member and a rotating body for inputting a torque to the input shaft or the input shaft, that prevents the input shaft from rotating in the reverse direction.

According to a fourth aspect, there is provided the continuously variable transmission according to any one of the first to third aspects, further including: an auxiliary shaft disposed coaxially with the output shaft and parallel to the input shaft; a drive gear coupled to the output disk; and a driven gear, engaged with the drive gear, that is coupled to the auxiliary shaft.

### Advantageous Effects of Invention

In the continuously variable transmission according to the present invention, the first one-way clutch disposed between the output shaft and the fixed member prevents the output shaft from rotating in the reverse direction and the output disk from rotating in the reverse direction, thereby preventing the roller from falling off from between the track surfaces. In addition, since the first one-way clutch that prevents the output shaft from rotating in the reverse direction is disposed between the output shaft and the fixed member, the ratio coverage of the output in the negative direction can be increased.

### Brief Description of Drawings

Fig. 1 is a skeleton diagram of a continuously variable transmission according to an embodiment.
Fig. 2 is a diagram illustrating the relationship between the speed ratio of a variator and the output speed of the continuously variable transmission.

### Description of Embodiments

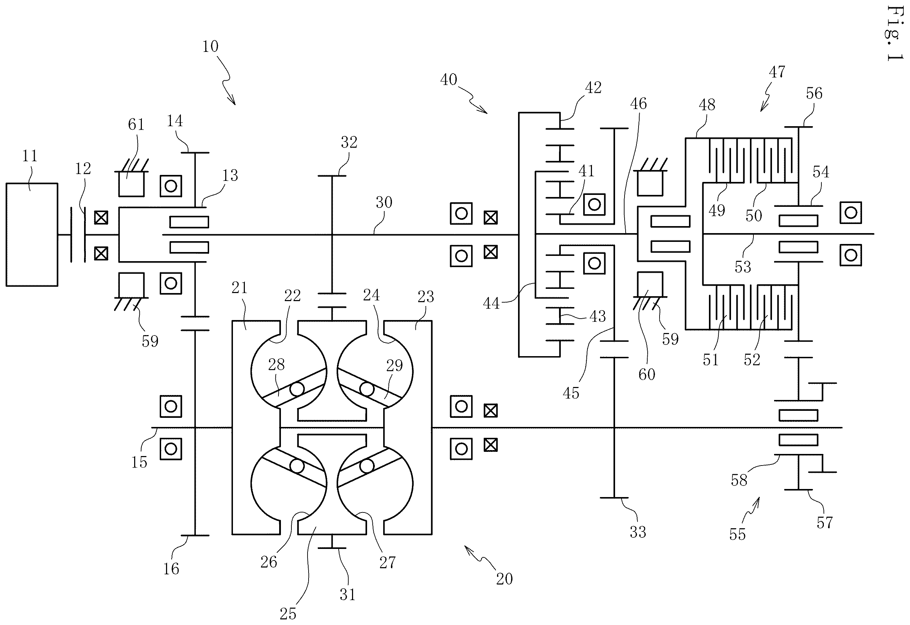

Preferred embodiments of the present invention will be described with reference to the accompanying drawings. Fig. 1 is a skeleton diagram of a continuously variable transmission 10 according to one embodiment. The continuously variable transmission 10 includes a toroidal continuously variable transmission (variator) 20 to which a torque of an engine 11 is input and a planetary device 40. The torque of the engine 11 is transmitted through a clutch 12 to a rotating body 13 disposed coaxially with a crankshaft of the engine 11. A drive gear 14 coupled to the rotating body 13 is always engaged with a driven gear 16 coupled to an input shaft 15 disposed parallel to the rotating body 13. The torque of the engine 11 is transmitted to the input shaft 15 by the driven gear 16 engaged with the drive gear 14.

The variator 20 includes input disks 21 and 23 that rotate integrally with the input shaft 15, an output disk 25, located between the input disks 21 and 23, that is rotatably disposed on the input shaft 15, and rollers 28 and 29 disposed between the output disk 25 and the input disks 21 and 23, respectively. In the embodiment, the variator 20 is a double-cavity full-toroidal transmission.

The variator 20 includes a pressure device (not illustrated). The pressure device includes a drum that rotates integrally with, for example, the input disk 21. The input disks 21 and 23 are attached to the input shaft 15 movably in the axial direction. The drum generates a pressing force (hydraulic pressure) proportional to a torque and elastically presses the input disk 21 toward the output disk 25. The input disk 23 receives a thrust load, and the output disk 25 transmits the torque through the rollers 28 and 29 disposed between the output disk 25 and the input disks 21 and 23.

The pressure device is not limited to a hydraulic mechanism that generates a pressing force proportional to the torque. For example, a mechanical cam mechanism can of course be adopted as the pressure device.

A curved track surface 22 provided on the input disk 21 faces a curved track surface 26 provided on the output disk 25. A curved track surface 24 provided on the input disk 23 faces a curved track surface 27 provided on the output disk 25. The rollers 28 and 29 are rotatably supported by a carriage (not illustrated). The roller 28 is pressed against the track surfaces 22 and 26 by a carriage with a caster angle, and the roller 29 is pressed against the track surfaces 24 and 27 by a carriage with a caster angle. As a result, the rollers 28 and 29 operate stably between the track surfaces.

The auxiliary shaft 30 is disposed coaxially with the rotating body 13 and parallel to the input shaft 15. A drive gear 31 coupled to the output disk 25 is always engaged with a driven gear 32 coupled to the auxiliary shaft 30. The torque of the output disk 25 is transmitted to the auxiliary shaft 30 by the driven gear 32 engaged with the drive gear 31.

The planetary device 40 is disposed coaxially with the auxiliary shaft 30. The planetary device 40 includes a sun gear 41, a ring gear 42 that surrounds the sun gear 41, and a carrier 44 that supports a plurality of pinions 43 that roll between the sun gear 41 and the ring gear 42. In the embodiment, the ring gear 42 is coupled to the auxiliary shaft 30, the carrier 44 is coupled to an output shaft 46 that passes through the inside of the sun gear 41, and the sun gear 41 is coupled to a first gear 45. The first gear 45 is always engaged with a second gear 33 coupled to the input shaft 15.

The clutch 47 has the function of transmitting and interrupting power between the second shaft 54 and the first shaft 53 disposed coaxially with the output shaft 46. The clutch 47 includes a drum 48 coupled to the output shaft 46, a first hub 49 and a second hub 50 arranged in the axial direction inside the drum 48, a clutch plate 51 disposed between the first hub 49 and the drum 48, and a clutch plate 52 disposed between the second hub 50 and the drum 48. The clutch 47 functions through mechanical operation, electromagnetic operation, hydraulic operation, pneumatic operation, or the like. The first hub 49 is coupled to the first shaft 53, and the second hub 50 is coupled to the second shaft 54. The second shaft 54 is rotatably disposed on the first shaft 53.

When the drum 48 and the first hub 49 rotate integrally with each other due to a frictional force acting on the clutch plate 51, the clutch 47 transmits power between the output shaft 46 and the first shaft 53. When the drum 48 and the second hub 50 rotate integrally with each other due to a frictional force acting on the clutch plate 52, the clutch 47 transmits power between the output shaft 46 and the second shaft 54. The clutch 47 has the function of switching the transmission of power between the output shaft 46 and the first shaft 53 and the transmission of power between the output shaft 46 and the second shaft 54.

The reversal mechanism 55 transmits power while reversing rotation directions of the output shaft 46, the first shaft 53, and the second shaft 54. The reversal mechanism 55 includes a third gear 56 coupled to the second shaft 54, a fourth gear 57 always engaged with the third gear 56, and a third shaft 58 coupled to the fourth gear 57. The third shaft 58 is rotatably disposed on the input shaft 15. The third shaft 58 rotates in the opposite direction of the rotation direction of the output shaft 46 and the first shaft 53 via the reversal mechanism 55. The torque of the third shaft 58 is transmitted to other rotating bodies via gears and shafts coupled to the third shaft 58.

For example, when the continuously variable transmission 10 is mounted on a vehicle (not illustrated), such as an automobile or an agricultural machinery, and the engine 11 drives wheels, the power transmission path between the continuously variable transmission 10 and the wheels can be set such that the vehicle moves forward when the first shaft 53 transmits power to the wheels, and the vehicle moves rearward when the third shaft 58 transmits power to the wheels through the reversal mechanism 55. In contrast, the power transmission path between the continuously variable transmission 10 and the wheels can be set such that the vehicle moves rearward when the first shaft 53 transmits power to the wheels, and the vehicle moves forward when the third shaft 58 transmits power to the wheels through the reversal mechanism 55. The output of the continuously variable transmission 10 that moves the vehicle forward is referred to as the output in the positive direction, and the output of the continuously variable transmission 10 that moves the vehicle rearward is referred to as the output in the negative direction.

When the rotation direction of the crankshaft of the engine 11 to be operated is the positive direction, and the rotation direction of the output shaft 46 when the torque and the rotation of the crankshaft in the positive direction are transmitted to the output shaft 46 through the variator 20 and the planetary device 40 is the positive direction, the output shaft 46 rotates in the positive direction when the first shaft 53 transmits power to the wheels or when the third shaft 58 transmits power to the wheels.

A first one-way clutch 60 is disposed between the output shaft 46 and a fixed member 59 that stays at a specific position and does not move, such as the case for the continuously variable transmission 10. When the output shaft 46 rotates in the positive direction, the first one-way clutch 60 is disengaged, and the torque of the output shaft 46 is transmitted to the drum 48. On the other hand, when a torque in the reverse direction is input to the output shaft 46, such as when a torque in the reverse direction is input to the first shaft 53 from the wheels in a vehicle (not illustrated) that stops on an uphill slope, the first one-way clutch 60 is engaged to prevent the output shaft 46 from rotating in the reverse direction.

A second one-way clutch 61 is disposed between the fixed member 59 and the rotating body 13. When the rotating body 13 rotates in the positive direction as the crankshaft of the engine 11 rotates in the positive direction, the second one-way clutch 61 is disengaged, and the torque of the rotating body 13 in the positive direction is transmitted to the input shaft 15 due to the engagement between the drive gear 14 and the driven gear 16. On the other hand, when, for example, the engine 11 starts or stops, the crankshaft may slightly rotate in the reverse direction. At this time, the second one-way clutch 61 is engaged to prevent the rotating body 13 from rotating in the reverse direction, and accordingly, the input shaft 15 is prevented from rotating in the reverse direction.

The torque of the engine 11 is transmitted to the input shaft 15 through the rotating body 13, the drive gear 14, and the driven gear 16, and the continuously variable transmission 10 inputs the torque of the output disk 25 of the variator 20 to the planetary device 40 through the drive gear 31, the driven gear 32, and the auxiliary shaft 30. In addition, the continuously variable transmission 10 inputs the torque of the input shaft 15 to the planetary device 40 through the second gear 33 and the first gear 45.

Since the continuously variable transmission 10 distributes the torque of the input shaft 15 between the variator 20 and the planetary device 40, and the torque coupled by the planetary device 40 is output from the output shaft 46, the torque transmitted by the variator 20 can be reduced as compared with the case in which all the torque of the input shaft 15 is transmitted by the variator 20. As a result, the energy loss caused by the slipping between the rollers 28 and 29 and the input disks 21 and 23 or the output disk 25 can be reduced, and accordingly, the amount of heat generation can be reduced. In addition, the variator 20 can be made smaller and lighter as compared with the case in which the variator 20 transmits all the torque of the input shaft 15. In addition, the torque of the input shaft 15 is distributed to the planetary device 40, which has a higher transmission efficiency than the variator 20, and accordingly, the degradation of the transmission efficiency of the continuously variable transmission 10 caused by the variator 20 can be reduced.

Since the first one-way clutch 60, which is disposed between the fixed member 59 and the output shaft 46, prevents the output shaft 46 from rotating in the reverse direction, the operation of the rollers 28 and 29 can be prevented from becoming unstable because the input disks 21 and 23 and the output disk 25 rotate in the reverse direction due to the reverse rotation of the output shaft 46. As a result, the rollers 28 and 29 pressed by the carriage can be prevented from falling off from between the track surfaces 22 and 26 and between the track surfaces 24 and 27.

Since the first one-way clutch 60 is disengaged when the output shaft 46 rotates in the positive direction, a drag torque is generated. Since the first one-way clutch 60 is disposed between the fixed member 59 and the output shaft 46, the first one-way clutch 60 with a small diameter can be used. As a result, the drag torque of the first one-way clutch 60 generated when the output shaft 46 rotates in the positive direction can be reduced.

The output of the continuously variable transmission 10 is taken from either the first shaft 53 or the third shaft 58 through the clutch 47. When the output in the positive direction (that is, forward movement) of the continuously variable transmission 10 is taken from the first shaft 53, the output in the negative direction (that is, reverse movement) is taken from the third shaft 58 through the reversal mechanism 55 by switching the clutch 47.

In Fig. 2, the relationship between the speed ratio (output speed/input speed) of the variator 20 and the output speed of the continuously variable transmission 10 is indicated with a solid line. Since the rotation directions of the input disks 21 and 23 and the output disk 25 are reversed in the variator 20, the speed ratio of the variator 20 (vertical axis) is always negative. Since the output shaft 46 always rotates in the positive direction, the output speed of the continuously variable transmission 10 in the negative direction extracted from either the first shaft 53 or the third shaft 58 gradually increases from 0 due to gear shifting by the variator 20. Accordingly, the ratio coverage (the range of the speed ratio of the variator) of the output in the negative direction can be increased as compared with the related art (the dashed line in Fig. 2).

The larger the ratio coverage, the larger the range of speed at which the engine 11 can output at low revolutions. Accordingly, the continuously variable transmission 10 has an advantage of better fuel efficiency and superior quietness during the output in the negative direction as compared with the related art.

In the continuously variable transmission 10, switching by the reversal mechanism 55 is performed when the output speed of the continuously variable transmission 10 is 0. As illustrated in Fig. 2, switching between the output in the positive direction and the output in the negative direction is performed when the output speed of the continuously variable transmission 10 is 0. Since switching by the reversal mechanism 55 is performed when the output speed of the continuously variable transmission 10 is 0, a simpler mechanism and improved robustness can be achieved as compared with the case in which switching by the reversal mechanism 55 is performed when the output speed of the continuously variable transmission 10 is not 0.

The output speed of the continuously variable transmission 10 in the positive direction also gradually increases from 0 due to gear shifting by the variator 20. Accordingly, the ratio coverage of the output in the positive direction of the continuously variable transmission 10 can be made equivalent to the ratio coverage of the output in the negative direction.

The first one-way clutch 60 is disposed between the planetary device 40 and the clutch 47, and the clutch 47 through the first one-way clutch 60 switches between the output in the positive direction and the output in the negative direction. Accordingly, in both cases of the output in the positive direction and the output in the negative direction in the continuously variable transmission 10, the rollers 28 and 29 can be prevented from falling off from between the track surfaces 22 and 26 and the track surfaces 24 and 27 of the variator 20.

The second one-way clutch 61 disposed between the fixed member 59 and the rotating body 13 prevents the input shaft 15 from rotating in the reverse direction. This prevents the operation of the rollers 28 and 29 from becoming unstable because the input disks 21 and 23 rotate in the reverse direction due to the reverse rotation of the input shaft 15, and accordingly, the rollers 28 and 29 can be prevented from falling off from between the track surfaces 22 and 26 or between the track surfaces 24 and 27.

In the continuously variable transmission 10, the drive gear 31 coupled to the output disk 25 of the variator 20 is engaged with the driven gear 32 coupled to the auxiliary shaft 30 disposed coaxially with the output shaft 46 and parallel to the input shaft 15, and the torque of the output disk 25 is input to the planetary device 40. As a result, the length of the continuously variable transmission 10 in the axial direction can be reduced as compared with the continuously variable transmission in which the variator 20 is disposed coaxially with the planetary device 40.

The present invention has been described in accordance with an embodiment, but it can be easily inferred that the present invention is not limited to the embodiment, and various modifications and modifications can be made without departing from the spirit of the present invention.

The case in which the double-cavity full-toroidal variator is used as the variator 20 has been described in the embodiment, but the present invention is not necessarily limited to this example. A double cavity variator or a half toroidal variator can of course be used as the variator 20.

The planetary device 40 (planetary gear device) including the sun gear 41, the ring gear 42, and the pinion 43 has been described in the embodiment, but the present invention is not necessarily limited to this example. A planetary roller device that transmits power by using traction can of course be adopted instead of the planetary gear device. Use of the planetary roller device as the planetary device 40 can reduce vibration and noise while eliminating backlash.

The case in which the planetary device 40 includes a single planetary gear train has been described in the embodiment, but the present invention is not necessarily limited to this example. A compound planetary gear train in which a plurality of planetary gear trains are combined with each other can of course be adopted as the planetary device 40.

The case in which the ring gear 42 of the planetary device 40 is coupled to the auxiliary shaft 30, the carrier 44 is coupled to the output shaft 46, and the sun gear 41 is coupled to the first gear 45 always engaged with the second gear 33 coupled to the input shaft 15 has been described in the embodiment, but the present invention is not necessarily limited to this example. For example, (1) the case in which the carrier 44 is coupled to the auxiliary shaft 30, the ring gear 42 is coupled to the output shaft 46, and the sun gear 41 is coupled to the first gear 45, (2) the case in which the carrier 44 is coupled to the auxiliary shaft 30, the sun gear 41 is coupled to the output shaft 46, and the ring gear 42 is coupled to the first gear 45, (3) the case in which the sun gear 41 is coupled to the auxiliary shaft 30, the ring gear 42 is coupled to the output shaft 46, and the carrier 44 is coupled to the first gear 45, or the like can be set as appropriate. That is, the planetary device 40 can arbitrarily select the first element, the second element, or the third element.

The case in which the second one-way clutch 61 is disposed between the fixed member 59 and the rotating body 13 disposed coaxially with the crankshaft (not illustrated) of the engine 11 has been described in the embodiment, but the present invention is not necessarily limited to this example. The second one-way clutch 61 can of course be disposed between the input shaft 15 and the fixed member 59.

The case in which the torque of the crankshaft of the engine 11 is transmitted to the input shaft 15 by using the drive gear 14 and the driven gear 16 has been described in the embodiment, but the present invention is not necessarily limited to this example. After the input shaft 15 is disposed coaxially with the crankshaft of the engine 11, the torque of the crankshaft of the engine 11 can of course be transmitted to the input shaft 15 by using a spline shaft, a serration shaft, or the like. In this case, the second one-way clutch 61 is disposed between the input shaft 15 and the fixed member 59.

The case in which the clutch 47 that transmits power through the frictional force of the clutch plates 51 and 52 has been described in the embodiment, but the present invention is not necessarily limited to this example. Other friction clutches other than disk clutches, such as drum clutches or conical clutches, can be used as the clutch 47 or engagement clutches, centrifugal clutches, or the like that perform engagement through mechanical engagement can be used.

### DESCRIPTION OF REFERENCE NUMERALS

10 continuously variable transmission
13 rotating body
15 input shaft
20 variator
21 input disk
22 track surface
25 output disk
26 track surface
28 roller
30 auxiliary shaft
31 drive gear
32 driven gear
40 planetary device
41 sun gear (first element)
42 ring gear (second element)
44 carrier (third element)
46 output shaft
47 clutch
55 reversal mechanism
59 fixed member
60 first one-way clutch
61 second one-way clutch

## Claims

1. A continuously variable transmission comprising:
a variator including
an input disk, having a curved track surface, that rotates integrally with an input shaft,
an output disk having a track surface facing the curved track surface, and
a roller pressed against the two track surfaces;
a planetary device including
a first element to which a torque of the input shaft is input,
a second element to which a torque of the output disk is input, and
a third element that rotates as the first element and the second element rotate, the third element being coupled to an output shaft; and
a first one-way clutch, disposed between the output shaft and a fixed member, that prevents the output shaft from rotating in a reverse direction.

2. The continuously variable transmission according to Claim 1, further comprising:
a reversal mechanism that transmits power while reversing a rotation direction of the output shaft; and
a clutch disposed between the output shaft and the reversal mechanism,
wherein the first one-way clutch is disposed between the clutch and the planetary device.

3. The continuously variable transmission according to Claim 1 or 2, further comprising:
a second one-way clutch, disposed between the fixed member and a rotating body for inputting a torque to the input shaft or the input shaft, that prevents the input shaft from rotating in the reverse direction.

4. The continuously variable transmission according to Claim 1 or 2, further comprising:
an auxiliary shaft disposed coaxially with the output shaft and parallel to the input shaft;
a drive gear coupled to the output disk; and
a driven gear, engaged with the drive gear, that is coupled to the auxiliary shaft.
